# EUROPÄISCHE PATENTANMELDUNG

(11) **EP 3 978 346 A1**
(43) Veröffentlichungstag der Anmeldung: **06.04.2022**
(21) Anmeldenummer: 21195304.7
(22) Anmeldetag: 07.09.2021
(51) Int. Cl.: B62M 6/55, B62J 43/28, B62J 43/13

(54) **FAHRRAD-BATTERIEEINRICHTUNG**

(30) Priorität: 01.10.2020 DE 202020105636 U
(71) Anmelder: Canyon Bicycles GmbH, 56073 Koblenz (DE)
(72) Erfinder: Thoma, Vincenz, 87538 Obermaiselstein (DE); Schmidt, Patrick, 56068 Koblenz (DE); Klein, Philipp, 56073 Koblenz (DE); Parmenter, Christian, 56068 Koblenz (DE)
(74) Vertreter: dompatent von Kreisler Selting Werner - Partnerschaft von Patent- und Rechtsanwälten mbB

(57) **Zusammenfassung**

Eine Fahrrad-Batterieeinrichtung weist ein Fahrradrahmenrohr wie ein Unterrohr (14) auf. In Längsrichtung (24) des Fahrradrahmenrohrs (14) ist durch eine Batterieöffnung (22) eine Batterie (30) einsteckbar. Um ein einfaches Fixieren der Batterie (30) am Fahrradrahmenrohr (14), insbesondere mittels Schrauben zu ermöglichen, ist eine Montagehilfe (28, 32) mit der Batterie (30) und/oder dem Fahrradrahmenrohr (14), insbesondere im Bereich der Batterieöffnung (22) verbunden. Durch die Montagehilfe erfolgt ein einfaches Montieren derart, dass insbesondere Schraubenlöcher in dem Fahrradrahmenrohr mit Gewindebohrungen in der Batterie fluchten.

## Beschreibung

Die Erfindung betrifft eine Fahrrad-Batterieeinrichtung.

Bei E-Bikes ist es bekannt die Batterie im Fahrradrahmen anzuordnen. Häufig erfolgt ein Anordnen der Batterie im Bereich des Unterrohrs des Fahrradrahmens. Beispielsweise wird die Batterie an einer Außenseite des Unterrohrs fixiert, wobei das Unterrohr eine nach außen weisende Vertiefung aufweisen kann, in der die Batterie fixiert wird. Bei innerhalb eines Fahrradrahmenrohrs, insbesondere eines Unterrohrs eines Fahrradrahmens angeordneten Batterien ist es erforderlich die Batterien innerhalb des Rahmenrohrs zu fixieren. Die Fixierung erfolgt beispielsweise über Schrauben, die durch Öffnungen im Fahrradrahmenrohr geführt und in mit einem Gewinde versehenen Bohrungen der Batterie, insbesondere des Batteriegehäuses eingeschraubt werden. Hierzu ist es erforderlich, dass die Gewindebohrungen der Batterie mit den Durchgangsbohrungen im Fahrradrahmenrohr fluchten. Das Einschieben der Batterie erfolgt üblicherweise derart, dass das Fahrrad auf den Kopf gestellt oder auf die Seite gelegt wird, sodass die Batterie auf einfache Weise eingeschoben werden kann. Insbesondere wenn das Fahrrad auf dem Kopf steht, muss die Batterie mit einer Hand in der richtigen Position gehalten werden, während mit der anderen Hand die Schrauben durch die Durchgangsbohrung in die Gewindebohrung geschraubt werden. Eine derartige Justage ist relativ kompliziert. Ferner ist es bekannt, im Inneren des Fahrradrahmenrohrs einen Anschlag vorzusehen. Dieser stellt sicher, dass die Batterie zumindest in Längsrichtung nicht zu weit in den Rahmen eingeschoben wird. Eine seitliche Justage ist dennoch von Hand erforderlich, um die Schrauben zu Fixierung der Batterie einsetzen zu können. Ferner ist die Montage eines im Rahmenrohr angeordneten Anschlags aufwändig.

Aufgabe der Erfindung ist es, eine einfach zu montierende Fahrrad-Batterieeinrichtung zu schaffen.

Die Lösung der Aufgabe erfolgt erfindungsgemäß durch eine Fahrrad-Batterieeinrichtung mit den Merkmalen des Anspruchs **1.**

Die erfindungsgemäße Fahrrad-Batterieeinrichtung weist ein Fahrradrahmenrohr auf, bei dem es sich insbesondere um ein Unterrohr eines Fahrradrahmens handelt. Das Fahrradrahmenrohr weist eine Batterieöffnung auf. Vorzugsweise handelt es sich hierbei um eine an einer Längsseite bzw. Stirnseite des Fahrradrahmenrohrs angeordnete Öffnung. Insbesondere ist die Batterieöffnung am tretlagerseitigen Ende des Unterrohrs angeordnet. Über die Batterieöffnung kann eine Batterie in Längsrichtung in das Fahrradrahmenrohr eingesetzt bzw. eingeschoben werden. Die Batterie umfasst üblicherweise ein Batteriegehäuse, das insbesondere mehrere Batteriezellen, eine Steuereinrichtung, einen Ladeanschluss und dergleichen aufweist. Erfindungsgemäß ist mit der Batterie und/oder dem Fahrradrahmenrohr eine Montagehilfe zur Festlegung einer Montageposition verbunden. Insbesondere ist die Montagehilfe im Bereich der Batterieöffnung, die vorzugsweise am tretlagerseitigen Ende des Unterrohrs vorgesehen ist, angeordnet. Aufgrund der Montagehilfe ist auf einfache Weise die Batterie in einer Montageposition justiert bzw. festgelegt, sodass die Batterie in dem Fahrradrahmenrohr auf einfache Weise mit Fixierelementen befestigt werden kann. Bei den Fixierelementen kann es sich insbesondere um ein oder mehrere Schrauben handeln, die jeweils durch ein im Fahrradrahmenrohr vorgesehenes Schraubenloch eingeführt und in eine in der Batterie, insbesondere in dem Batteriegehäuse, vorgesehene Gewindebohrung eingeschraubt werden.

Bei einer bevorzugten Ausführungsform der Erfindung weist die Montagehilfe einen in Längsrichtung weisenden Ansatz auf. Die Längsrichtung des Fahrradrahmenrohrs entspricht vorzugsweise der Einschubrichtung der Batterie. Der Ansatz ist vorzugsweise derart ausgebildet, dass in einer eingeschobenen Position der Batterie der Ansatz eine Seitenwand des Fahrradrahmenrohrs übergreift. In eingeschobener Position liegt somit ein Teil des Ansatzes an einer Außenseite des Fahrradrahmenrohrs an. Alternativ oder zusätzlich kann der Ansatz mit einem Vorsprung zusammenwirken, der an der Batterie vorgesehen ist, so dass die Funktionsrichtung zumindest teilweise umgekehrt ist. Durch einen derartigen Ansatz erfolgt eine Justage der Batterie in zumindest eine Richtung. Bei einem Unterrohr, in das die Batterie eingesetzt wird, dient der Ansatz insbesondere zur vertikalen Justage.

Bei einer besonders bevorzugten Weiterbildung der Erfindung weist die Montagehilfe eine Anschlagfläche auf, die mit einer am Fahrradrahmenrohr oder der Batterie vorgesehen Anlagefläche zusammenwirkt. Beim Einsetzen bzw. Einschieben der Batterie in das Fahrradrahmenrohr gelangt somit die Anschlagfläche in Anlage mit der Anlagefläche. Dies dient insbesondere zur Justage der Batterie relativ zum Fahrradrahmenrohr in Längs- bzw. Einschubrichtung.

Die Anschlagfläche sowie die Anlagefläche sind vorzugsweise komplementär zueinander ausgebildet. Bevorzugt ist es, dass die Anschlagfläche und/oder die Anlagefläche sich teilweise in Längsrichtung erstrecken. Zumindest eine der beiden Flächen erstreckt sich somit nicht nur senkrecht zur Längs- bzw. Einschubrichtung. Hierdurch ist zusätzlich zu einer Justage in Längsrichtung auch eine seitliche bzw. laterale Justage möglich. Besonders bevorzugt ist es, dass die Anschlagfläche und oder die Anlagefläche in Längsrichtung gekrümmt ist bzw. sind. Durch entsprechende, insbesondere komplementäre Krümmung beider Flächen ist eine gute Justage sowohl in Längsrichtung als auch lateral gewährleistet.

Um die Montage weiter zu vereinfachen, ist es besonders bevorzugt, dass die Anschlagfläche oder die Anlagefläche in Längsrichtung trichterförmig ausgebildet ist. Hierdurch erfolgt eine automatische Justage bei einfachem Einführen. Des Weiteren ist es bevorzugt, dass die Anschlagfläche oder die Anlagefläche in Längsrichtung keilförmig ausgebildet ist. Auch hierdurch ist die Justage und die Montage vereinfacht. Besonders bevorzugt ist es, dass eine der beiden Flächen trichterförmig und die andere Fläche keilförmig ausgebildet ist oder vorzugsweise wiederum komplementär zueinander sind.

Bei einer bevorzugten Weiterbildung der Erfindung ist die Anschlagfläche und/oder die Anlagefläche quer zu Längsrichtung gekrümmt. Ferner kann die Anschlagfläche oder die Anlagefläche quer zur Längsrichtung trichterförmig ausgebildet sein. Des Weiteren kann die Anschlagfläche oder die Anlagefläche quer zu Längsrichtung keilförmig ausgebildet sein. Bevorzugt ist hierbei wiederum eine Kombination, sodass eine sehr gute vertikale Justage gewährleistet ist.

Vorzugsweise ist die Anschlagfläche oder die Anlagefläche durch eine in Längsrichtung weisende Seitenfläche des Fahrradrahmenrohrs ausgebildet. Die Fläche ist somit insbesondere durch eine Seitenfläche der Batterieöffnung ausgebildet.

Die Montagehilfe kann als separates Bauteil ausgebildet sein, das mit der Batterie, insbesondere dem Batteriegehäuse, beispielsweise über eine Schraube verbunden ist. Hierdurch ist es möglich, beispielsweise in Abhängigkeit von Batterietypen oder Batteriegrößen auf einfache Weise unterschiedliche Montagehilfen vorzusehen. Auch kann hierdurch eine einfache Anpassung an unterschiedliche Fahrradrahmen erfolgen. Es ist ebenso möglich, dass die Montagehilfe einstückig mit der Batterie, insbesondere dem Batteriegehäuse ausgebildet ist. Dies macht die Montage, da keine gesonderte Befestigung der Montagehilfe an der Batterie erforderlich ist.

Bei einer besonders bevorzugten Ausführungsform erfolgt die Kraftübertragung zwischen der Batterie und im Fahrradrahmenrohr im Wesentlichen über Fixierelemente. Insbesondere erfolgt zumindest eine Übertragung von mehr als 70 %, insbesondere mehr als 80 % der im Betrieb auftretenden Kräfte. Die Fixierelemente halten die Batterie im Fahrradrahmenrohr in der eingeschobenen Position. Die Fixierelemente weisen insbesondere Schrauben auf, die durch Durchgangsöffnungen im Fahrradrahmenrohr geführt und in die Bohrungen eingeschraubt sind. Hierbei weist die Montagehilfe insbesondere eine Spielpassung auf, um sicherzustellen, dass keine oder nur geringe Kräfte über die Montagehilfe übertragen werden.

Insbesondere weist die erfindungsgemäße Montagehilfe den Vorteil auf, dass diese nicht innerhalb des Rahmenrohrs angeordnet ist und insofern sehr einfach zu montieren ist. Insbesondere sind keine zusätzlichen Befestigungsmittel am Rahmenrohr für eine Montage erforderlich, sodass der Rahmen hierdurch nicht geschwächt wird.

Nachfolgend wird die Erfindung anhand einer bevorzugten Ausführungsform unter Bezugnahme auf die anliegenden Zeichnungen näher erläutert.

Es zeigen:
- Figur 1: eine stark vereinfachte schematische Seitenansicht eines Fahrradrahmens,
- Figur 2: eine schematische perspektivische Ansicht des Unterrohrs im Bereich der Batterieöffnung,
- Figur 3: eine schematische Schnittansicht in Längsrichtung des Unterrohrs im Bereich der Batterieöffnung,
- Figur 4: eine schematische Draufsicht einer Außenseite des Unterrohrs im Bereich der Batterieöffnung und
- Figur 5: eine schematische Schnittansicht entlang der Linie IV-IV in Figur 4.

Ein Fahrradrahmen weist üblicherweise ein Oberrohr 10, ein mit dem Oberrohr 10 verbundenes Sattelrohr 12, ein Unterrohr 14 sowie ein mit dem Oberrohr 10 und dem Unterrohr 14 verbundenes Steuerrohr 16 auf. Ferner ist ein Tretlager- oder Motorgehäuse 18 vorgesehen, das zur Aufnahme eines Elektromotors des Tretlagers dient. Es sind auch andere Rahmengeometrien bekannt. Im dargestellten Ausführungsbeispiel ist das Unterrohr 14 derart angeordnet, dass ein tretlagerseitiges Ende 20 des Unterrohrs 14 eine Batterieöffnung 22 aufweist.

Die Batterieöffnung 22 ist somit bezogen auf eine Längsrichtung 24 des Unterrohrs 14 angeordnet. In die Batterieöffnung 22 kann im dargestellten Ausführungsbeispiel von unten in Längsrichtung 24 eine Batterie in das Unterrohr 14 eingeschoben werden.

Im dargestellten Ausführungsbeispiel ist eine Montagehilfe als zusätzliches Bauteil 28 an der Batterie 30 bzw. einem Gehäuse der Batterie 30 angeordnet. Die Montagehilfe 28 wirkt mit einem Bereich 32 des Unterrohrs 14 zusammen, so dass das Bauteil 28 und der Bereich 32, wie nachstehend im Detail ausgeführt, zusammen die Montagehilfe ausbilden.

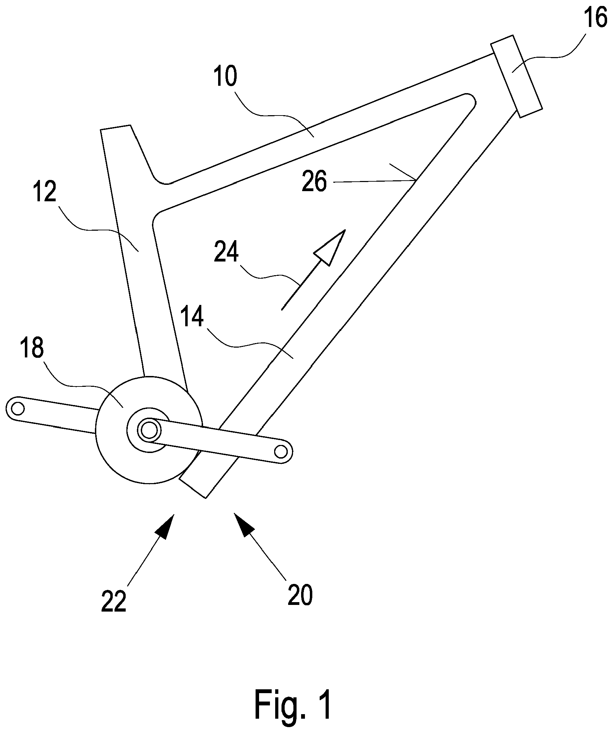

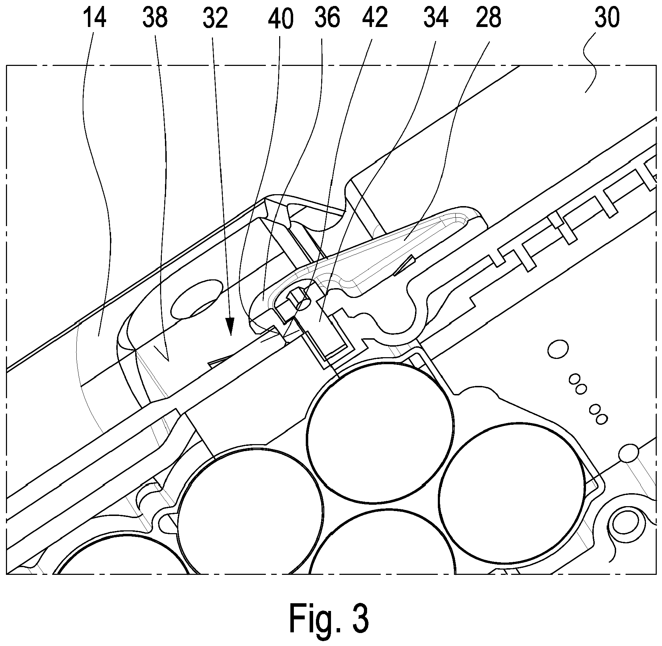

Im dargestellten Ausführungsbeispiel ist das Bauteil 28 der Montagehilfe mit Hilfe einer Schraube 34 an der Batterie 30 fixiert. Das Bauteil 28 der Montagehilfe weist einen Ansatz 36 (Figur 3) auf. Dieser übergreift eine Außenseite 38 des Unterrohrs 14. Die Außenseite 38 weist bei aufrechtstehendem Fahrradrahmen (Figur 1) nach unten. Durch den Ansatz 36, der in eingeschobenem Zustand der Batterie 30 an der Außenseite 38 des Unterrohrs 14 anliegt, ist bereits auf einfache Weise eine vertikale Ausrichtung der Batterie 30 verwirklicht.

Das Bauteil 28 der Montagehilfe weist eine Anschlagfläche 40 auf. In eingeschobenem Zustand (Figur 3) liegt die Anschlagfläche 38 an der Anlagefläche 40 an. Die Anlagefläche 40 ist die Seitenfläche, der unteren Wandung des Unterrohrs 14, die die Batterieöffnung 22 ausbildet. Durch die Anschlagfläche 40 und die Anlagerfläche 42 ist eine Justage der Batterie 40 in Längsrichtung 24 verwirklicht.

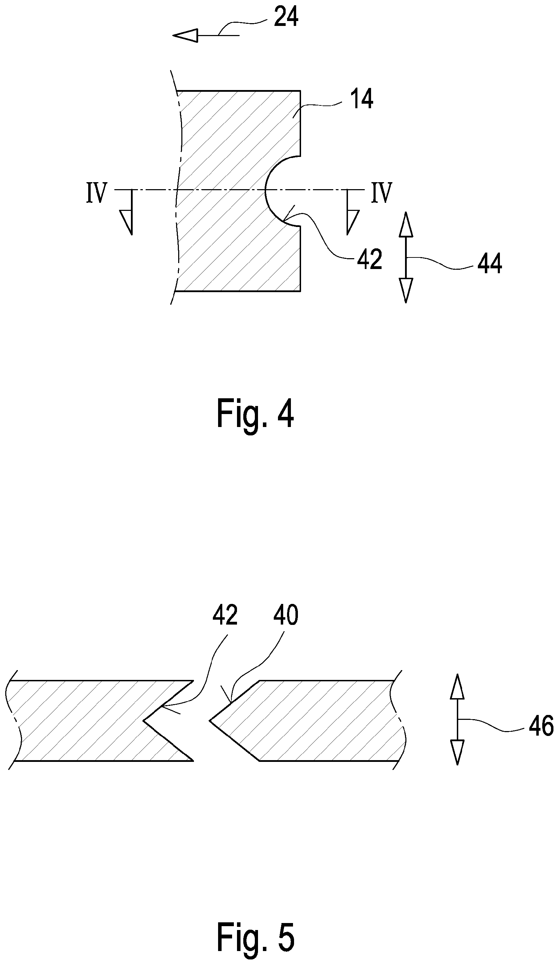

Die Anlagefläche 42 ist vorzugsweise als konkav gekrümmte Ausnehmung in der entsprechenden Seitenwand des Unterrohr 14 (Figur 4) ausgebildet. Die Anschlagfläche 40 ist vorzugsweise komplementär ausgebildet und insofern konvex gekrümmt. Durch eine derartige Ausgestaltung der Flächen 40, 42 erfolgt durch die Montagehilfe 28, 32 nicht nur eine Justage in Längsrichtung 24, sondern auch seitlich bzw. lateral in Richtung des Pfeils 44.

Im Querschnitt kann die Anlagefläche 42, wie in Figur 5 dargestellt, auch keilförmig ausgebildet sein. Entsprechend ist die Anschlagfläche 40, komplementär als Keil oder sich verjüngend ausgebildet. In eingeschobenen Zustand liegen die Flächen 40, 42 aneinander an, wobei durch die in Figur 5 dargestellte Ausführungsform auch eine vertikale Justage in Richtung des Pfeils 46 auf einfache Weise möglich ist. Bei Ausgestaltung der in Figur 5 dargestellten Ausführungsform kann gegebenenfalls der Ansatz 36 entfallen.

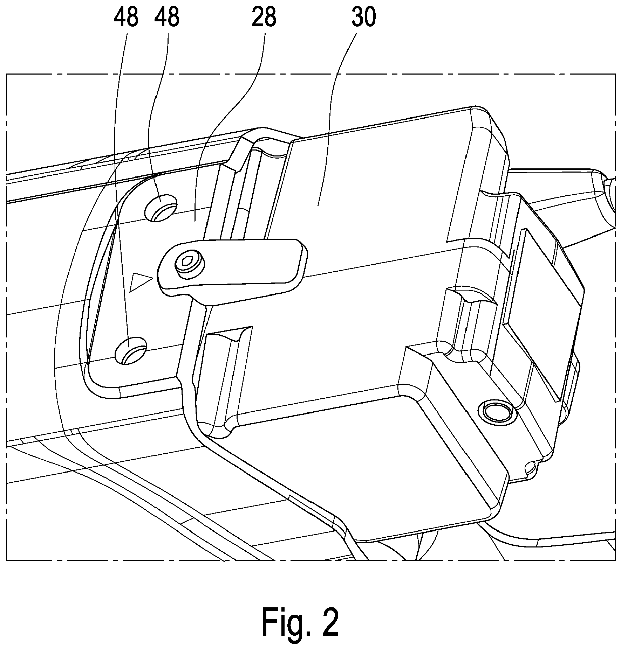

Nach dem Einschieben der Batterie 30 in Längsrichtung 24 in das Unterrohr 14 ist aufgrund des Vorsehens der erfindungsgemäßen Montagehilfe 28, 32 eine Justage derart realisiert, dass Durchgangsöffnungen 48 (Figur 2) in dem Unterrohr 14 mit in der Batterie bzw. dem Batteriegehäuse angeordneten Gewindebohrungen fluchten. Somit ist es auf einfache Weise möglich zur Fixierung der Batterie 30 in dem Unterrohr 14 Schrauben in die Bohrungen einzuschrauben.

## Patentansprüche

1. Fahrrad-Batterieeinrichtung mit
einem Fahrradrahmenrohr (14), insbesondere einem Unterrohr eines Fahrradrahmens,
einer in Längsrichtung (24) des Fahrradrahmenrohrs in dieses durch eine Batterieöffnung (22) einsetzbare Batterie (30) und
einer mit der Batterie (30) und/oder dem Fahrradrahmenrohr (14) verbundenen, insbesondere im Bereich der Batterieöffnung (22) angeordneten Montagehilfe (28, 32) zur Festlegung einer Montageposition.

2. Fahrrad-Batterieeinrichtung nach Anspruch 1, **dadurch gekennzeichnet, dass** die Montagehilfe einen in Längsrichtung (24) weisenden Ansatz (36) aufweist, der in eingeschobener Position der Batterie (30) eine Seitenwand des Fahrradrahmenrohrs (14) übergereift und/oder mit einem an der Batterie (30) vorgesehenen Vorsprung zusammenwirkt.

3. Fahrrad-Batterieeinrichtung nach Anspruch 1 oder 2, **dadurch gekennzeichnet, dass** die Montagehilfe (28, 32) eine Anschlagfläche (40) aufweist, die mit einer am Fahrradrahmenrohr (14) oder der Batterie (30) vorgesehenen Anlagefläche (42) zusammenwirkt.

4. Fahrrad-Batterieeinrichtung nach Anspruch 3, **dadurch gekennzeichnet, dass** die Anschlagfläche (40) und die Anlagefläche (42) komplementär zueinander ausgebildet sind.

5. Fahrrad-Batterieeinrichtung nach Anspruch 3 oder 4, **dadurch gekennzeichnet, dass** die Anschlagfläche (40) und/oder die Anlagerfläche (42) sich teilweise in Längsrichtung (24) erstrecken.

6. Fahrrad-Batterieeinrichtung nach einem der Ansprüche 1-3, **dadurch gekennzeichnet, dass** die Anschlagfläche (40) und/oder die Anlagerfläche (42) in Längsrichtung (24) gekrümmt sind.

7. Fahrrad-Batterieeinrichtung nach einem der Ansprüche 3-6, **dadurch gekennzeichnet, dass** die Anschlagfläche (40) oder die Anlagefläche (42) in Längsrichtung (24) trichterförmig ausgebildet sind.

8. Fahrrad-Batterieeinrichtung nach einem der Ansprüche 3-7, **dadurch gekennzeichnet, dass** die Anschlagfläche (40) oder die Anlagefläche (42) in Längsrichtung keilförmig ausgebildet sind.

9. Fahrrad-Batterieeinrichtung nach einem der Ansprüche 3-8, **dadurch gekennzeichnet, dass** die Anschlagfläche (40) und/oder die Anlagefläche (42) quer zu Längsrichtung gekrümmt sind.

10. Fahrrad-Batterieeinrichtung nach einem der Ansprüche 3-9, **dadurch gekennzeichnet, dass** die Anschlagfläche (40) oder die Anlagefläche (42) quer zur Längsrichtung trichterförmig ausgebildet sind.

11. Fahrrad-Batterieeinrichtung nach einem der Ansprüche 3-10, **dadurch gekennzeichnet, dass** die Anschlagfläche (40) oder die Anlagefläche (42) quer zur Längsrichtung keilförmig ausgebildet sind.

12. Fahrrad-Batterieeinrichtung nach einem der Ansprüche 3-11, **dadurch gekennzeichnet, dass** die Anschlagfläche (40) oder die Anlagefläche (42) durch eine in Längsrichtung (24) weisende Seitenfläche des Fahrradrahmenrohrs ausgebildet ist.

13. Fahrrad-Batterieeinrichtung nach einem der Ansprüche 1-12, **dadurch gekennzeichnet, dass** die Montagehilfe (28, 32) einstückig mit der Batterie (30) insbesondere einem Batteriegehäuse ausgebildet ist.

14. Fahrrad-Batterieeinrichtung nach einem der Ansprüche 1-13, **dadurch gekennzeichnet, dass** eine Kraftübertragung zwischen der Batterie (30) und dem Fahrradrahmenrohr (14) im Wesentlichen über Fixierelemente erfolgt, durch die die Batterie (30) im Fahrradrahmenrohr (14) gehalten ist.
